Europäisches Patentamt

European Patent Office

Office européen des brevets

(11) Publication number: **0 024 904**
**B1**

(12) **EUROPEAN PATENT SPECIFICATION**

(45) Date of publication of patent specification: **05.02.86**

(51) Int. Cl.⁴: **G 01 P 3/62**

(21) Application number: **80302928.9**

(22) Date of filing: **22.08.80**

(54) A variometer.

(30) Priority: **24.08.79 GB 7929504**

(43) Date of publication of application:
**11.03.81 Bulletin 81/10**

(45) Publication of the grant of the patent:
**05.02.86 Bulletin 86/06**

(84) Designated Contracting States:
**AT CH DE FR GB IT LI**

(56) References cited:
**FR-A-2 154 038**
**GB-A-1 011 488**
**US-A-3 369 397**
**US-A-3 400 581**

(73) Proprietor: **Leonard, Michael Gilbert**
**Southcott Barton House Westleigh**
**Bideford Devon (GB)**

(72) Inventor: **Leonard, Michael Gilbert**
**Southcott Barton House Westleigh**
**Bideford Devon (GB)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to a variometer for use in a glider or the like to indicate the rate of ascent or descent during flight.

Conventional variometers operate by monitoring the rate of flow or air into and out of a vessel as the glider ascends or descends causing an increase or decrease in the air pressure, this rate of flow being proportional to the rate of ascent or descent (hereinafter respectively referred to as "lift rate" and "sink rate") which is displayed by a calibrated dial indicator on the glider control panel. Later developments include variometers in which pressure changes are measured directly but these have proved unstable and non-linear in response to altitude variations.

U.S. Patent specification No. 3,400,581 relates to a flight control system for a powered aircraft. A signal derived from altitude information, and proportional to the rate of change of altitude, controls a tone generator producing two different continuous tones having different characteristics depending upon whether the aircraft is ascending or descending. When landing the aircraft, the pilot monitors his rate of descent by listening to the tone and if it differs from the tone signifying the correct rate of descent, he adjusts the rate of descent of the aircraft accordingly.

In the above system, the signal is derived from the normal aircraft altimeter measuring absolute altitude and consequently has such a slow response as to impractical for detecting deviation of a glider from a preset glide path. The use of an altimeter is also expensive. It is also known to detect the rate of change of altitude using a pressure sensor as described in U.S. Patent specification 3,726,138.

The present invention is as set out in claim 1. Particular embodiments are as set out in claims 2—6.

In contrast to conventional systems, the variometer of the present invention provides an audible signal variation which indicates not only deviation from a preset glide path but the extent of any deviation whether in lift or sink. By providing more information in audible form the pilot is relieved of visual tasks and the procedure of flying a glider is simplified.

Preferably, the audio circuit comprises a voltage controlled oscillator connected to the output of the differentiation circuit whereby variations in the output frequency of the oscillator correspond to the variations of the output of the differentiation circuit and hence also the rate of lift or sink.

The voltage controlled oscillator drives the pulse generator such that the repetition rate of pulses generated thereby is indicative of the rate of lift or sink. The pitch, that is to say the audible pitch, of the pulsed signal is changed by the switching means whereby the pilot can discern whether the actual sink rate is less than or greater than a predetermined sink rate and optionally whether there is positive lift.

Other embodiments of the invention are set forth in the appendant claims.

An embodiment of the invention will now be described by way of example with reference to the accompanying drawings of which:

Figure 1 is a block circuit diagram of the signal amplifying system of an embodiment of variometer for a glider or hang glider; and

Figure 2 is a block diagram of one audio circuit for use with the signal amplifying system of Figure 1.

A pressure transducer 100 is arranged within a casing which in use is mounted on the glider. The interior of the casing is in communication with the surrounding atmosphere via apertures which are not aligned and thereby provide a measure of protection against sudden pressure changes.

The output signal of the pressure transducer increases or decreases respectively with an increase or decrease in altitude. This output signal is sampled by a sample and hold circuit 102 at regular intervals determined by the frequency of a Master oscillator 103 and division of the shift register 104 which provides the correct timing sequence for a power-up pulse circuit for transducer, sample and hold, and output switch 109. Amplifier 107 is A.C. coupled via capacitors $C_1$ and $C_2$, capacitor $C_2$ being alternately connected to the 0V line and charge integrator 110 by the switch 109 and timing circuit 106, so that alternate samples of the transducer output are amplified and integrated to form an output at 110 which is proportional to the rate of change of altitude this being the rate of lift or sink experienced by the glider.

The use of this sampling technique has several advantages in that the capacitors $C_1$ and $C_2$, may have relatively small capacitance, the amplifier is not required to be D.C. stable and leakage currents are not as significant as would be the case with a D.C. coupled circuit. Also the power requirement and warm-up time for the transducer are considerably reduced, and the circuit is relatively insensitive to component value tolerances. There is a cost saving due to the use of relatively inexpensive components and chips to achieve the necessary stability against temperature variation and condensation leakage.

The output of the sample and hold circuit 102 is also an electrical analogue of altitude and this signal is used via a compensating circuit comprising shaper 108 to adjust the gain of the circuit so that the incremental pressure change sensitivity is increased with altitude by an amount sufficient to compensate for the effects of reducing pressure. The shaper and gain control elements consist of a temperature compensated light emitting diode (L.E.D.) drive circuit and photo resistor feed back gain control arrangement being sufficiently accurate to 9900 m (30,000 ft) for use on most gliders.

However, for greater accuracy and high altitude limits, the compensating circuit may comprise an Analogue — Digital converter and Read Only Memory storing date representing the desired gain as a function of pressure (and hence altitude also) and coupled to a Digital — Analogue converter resistor network in the gain control elements of the amplifier 107.

The response time of the variometer is selectable by switching-in an additional capacitor $C_3$ via $S_1$ into the charge integrator 110 and by similar additional elements via $S_2$ in active filter 111, the function of which is to form a low pass filter removing undesirably high frequency noise and pressure disturbances due to turbulence and wind.

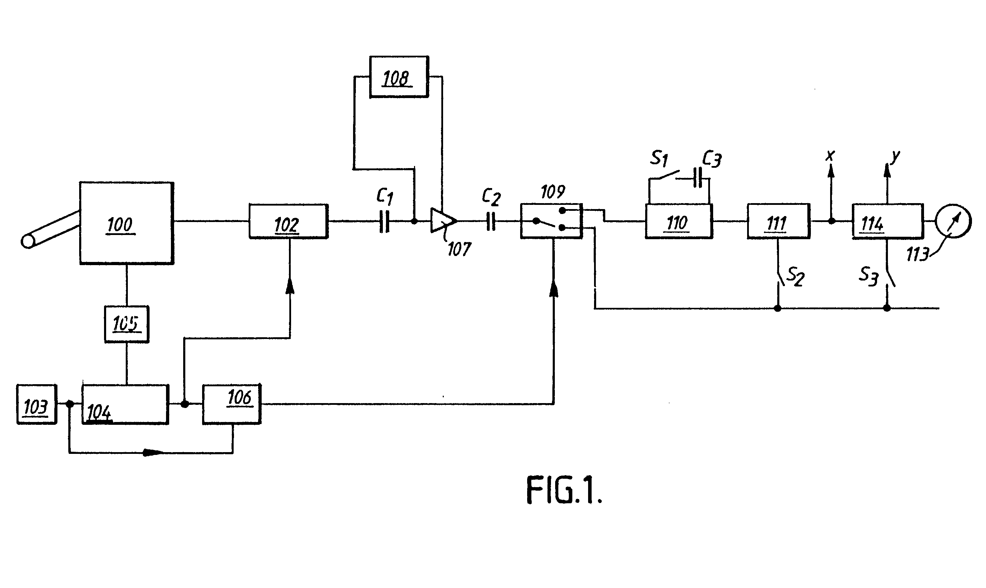

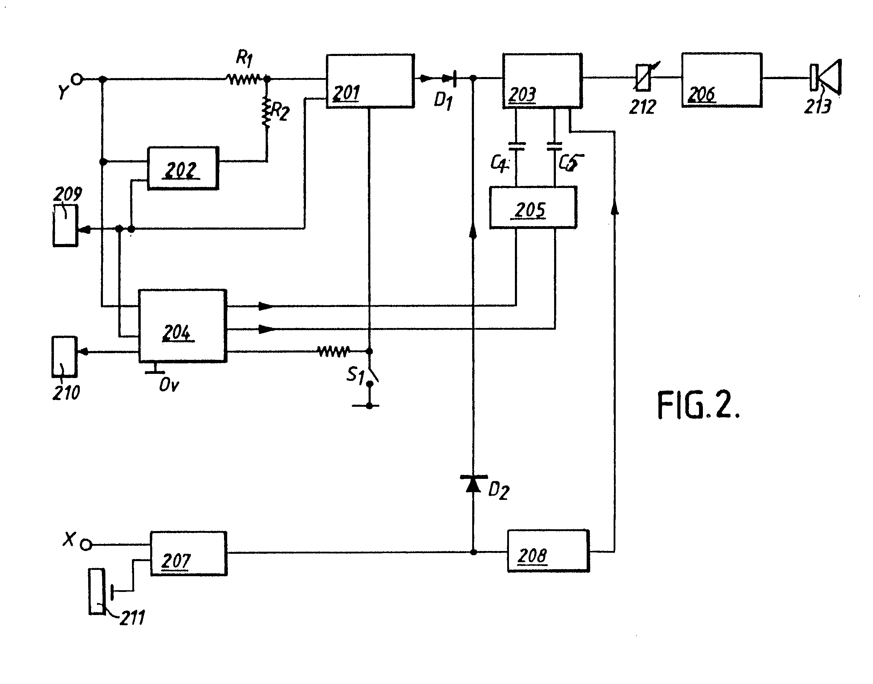

Terminals X and Y are connected to an audio circuit for producing audible signals indicative of the changing pressure conditions and hence lift or sink. In the audio circuits shown in Figure 2, a D.C. amplifier 114 (Fig. 1) drives the audio circuit input at terminal Y and the visual display or indicator 113 (Fig. 1) which may be a milli-ammeter or digital voltmeter, if a digital output is required. Range selection is accomplished by switching the gain of the D.C. amplifier 114 using switch $S_3$.

Terminal X which is connected to the output of a low-pass active filter 111 is unaffected by the switch $S_3$ and is used to drive a dive warning system to the audio circuit.

The audio circuit produces audible signals to indicate lift or sink, which signals are in the form of 'pips' or pulses with a repetition rate increasing as the rate of sink or lift increases or decreases relative to a datum value set by the 'sink rate' control on the panel of the instrument. To distinguish between sink or lift about this value the tone of the audible 'pips' is changed to a lower frequency on sink below the set value, to a higher frequency for a sink rate smaller than the set value but below zero sink and to a still higher frequency when there is positive lift.

A voltage controlled oscillator 201 compares the voltages from the set sink rate control 209 which may be a potentiometer, and the inputs or lift/sink analogue voltage at Y via resistor $R_1$, and also from an inverting precision rectifier 202 via resistor $R_2$, producing a low frequency output of variable frequency according to the rate of sink or lift relative to the value set by set sink control 209, this frequency increasing as the input at Y goes above or below the set value.

Pulse burst generator 203 is triggered by the output of the voltage controlled oscillator 201 via diode $D_1$, producing a tone burst with pitch dependent on the state of frequency selector switch unit 205 which is controlled by comparator means 204 such that a low pitch is produced when input Y is below the level set by 'set sink rate' control 209, a medium pitch is produced when input Y is between zero and the set level, and a high pitch is produced when input Y is above zero, indicating positive lift.

This signal is then connected via a volume control 212 and audio amplifier 206 to drive an audio output transducer 213 which may be a loudspeaker, a head phone set or piezoelectric device.

Silent sink switch $S_1$ allows the comparator at a point wherein input Y goes below the level set by control 209 to switch an 'inhibit' input of the voltage controlled oscillators 201 positive, preventing any triggering of pulse burst generator 203 in this sector.

Silent sink sector control 210 operates in a similar way, using the above comparator means 204 comprising a comparator whose input is backed off by this control from the set sink 209 value the two comparator outputs being gated together to produce an 'inhibit' pulse to the voltage controlled oscillator as described above so that between the sink rates set by 209 and 210 the voltage controlled oscillator produces no output and the pilot will be informed by the lack of audio output that he is flying between the sink rate limits set. This is valuable for Hang Gliding where many pilots prefer to fly in silence.

A "Dive Warning" system which overrides the other audio tones is generated by sweep generator 208 and pulse burst generator 203 triggered via diode $D_2$ by the output of comparator 207 when the sink rate signal at X exceeds the value preset by control 211. This warns the pilot that he is in a rapidly sinking airstream even if the silent sink mode is selected.

The variometer may include means sensitive to the air speed of the glider such that the audible signal produced is dependent both on a change in altitude and a change in velocity. The air speed measuring device preferably takes the form of a Brunswick tube which is a cylindrical tube having a pair of spaced apart circumferential slots in the tube wall which each subtend an angle of approximately 55° at the axis of the tube. The tube is mounted on the glider with its axis substantially parallel to the direction of air flow and with one end in communication with the interior of the casing 12. The characteristics of the tube are such that the pressure within the casing 12 is dependent both on the absolute air pressure surrounding the casing and on the square of the air speed. The variometer thus becomes a device which monitors the 'total energy' of the glider, i.e. the sum of the potential energy which is proportional to the altitude and the kinetic energy which is proportional to the square of the velocity.

The connection between the Brunswick tube may be interrupted or the slots may be converted if the apparatus is to be used to monitor only changes in potential energy.

## Claims

1. A variometer for use in a glider or the like comprising an electrical pressure transducer connected to a differentiating circuit (102, 103, 104, 106—111) for producing a signal representative of the rate of lift or sink of the glider and connected to an audio circuit providing an audio output signal variations in which correspond to variations in the output of the differentiation circuit to indicate deviation of the actual rate of lift or sink from a presettable rate of lift or sink characterised in that the audio circuit includes a pulse generator (203) controlled in response to a first output (Y) of the differentiation circuit such that the repetition rate.of the output signal of the pulse generator increases with increasing deviation from a preset rate of lift or sink, and range switch means (205) controlling the pitch of pulses produced by the pulse generator (203) and operable in response to comparator means (204) for comparing the output of the differentiation circuit with one or more reference signals derived from first and second means (209, 210) whereby a different pitch is produced to indicate whether the actual rate of lift or sink is less than or greater than the preset rate of lift or sink.

2. A variometer according to claim 1 wherein the audio circuit comprises a voltage controlled oscillator (201) connected to the first output of the differentiation circuit whereby variations in the output frequency of the voltage controlled oscillator (201) correspond to the variations of the output of the differentiation circuit and hence also the rate of lift or sink.

3. A variometer according to claim 2 wherein the pulse generator (203) is connected to the output of the voltage controlled oscillator (201), whereby the variation in the repetition rate of the pulses produced by the pulse generator provides the said indication of the rate of lift or sink.

4. A variometer according to any one of the preceding claims and comprising a comparator (207) for comparing a second output (X) of the differentiation circuit with a dive reference signal derived from third means (211) representative of a maximum sink rate and connected to an oscillator (208) for generating an audible signal when the output of the differentiation circuit exceeds the said dive reference signal, to warn of a dive.

5. A variometer according to any one of claims 1 to 4 wherein the differentiation circuit comprises an amplifier (107) the gain of which is adjustable by means of a compensating circuit (108) responsive to the output of the pressure transducer (100) so as to compensate for a loss in sensitivity due to an overall reduction in the static pressure with increasing altitude.

6. A variometer according to any one of the preceding claims and comprising means operable in response to a further comparator included in the comparator means (204) which further comparator is connected to the output of the differentiation circuit and a predetermined reference signal derived from said first and second means (209, 210) representing a predetermined sink rate or a range of sink rates including the predetermined sink rate, to suppress the audible signal when the actual sink rate is equal to the predetermined sink rate or within the said range.

**Revendications**

1. Variomètre destiné à être utilisé sur un planeur ou analogue, comprenant un transducteur de pression électrique branché à un circuit de différentiation (102, 103, 104, 106 à 111) pour produire un signal représentatif de la vitesse d'ascension ou de descente du planeur, et se branchant à un circuit audio fournissant un signal de sortie audio, dont les variations correspondent aux variations du signal de sortie du circuit de différentiation pour indiquer un écart de la vitesse actuelle d'ascension ou de descente par rapport à une vitesse d'ascension ou de descente préréglable, variomètre caractérisé en ce que le circuit audio comprend un générateur d'impulsions (203) commandé en fonction d'un premier signal de sortie (Y) du circuit de différentiation, de façon que le rythme de répétition du signal de sortie du générateur d'impulsions augmente en même temps que l'écart par rapport à une vitesse préréglée d'ascension ou de descente, et des moyens de commutation de gamme (205) commandant la hauteur des impulsions produites par le générateur d'impulsions (203) et pouvant fonctionner en réponse aux moyens de comparateur (204) pour comparer le signal de sortie du circuit de différentiation à un ou plusieurs signaux de référence provenant des premier et second moyens (209, 210), ce qui permet de produire une hauteur différente pour indiquer si la vitesse actuelle d'ascension ou de descente est inférieure ou supérieure à la vitesse préréglée d'ascension ou de descente.

2. Variomètre selon la revendication 1, caractérisé en ce que le circuit audio est constitué par un oscillateur commandé en tension (201), branché à la première sortie du circuit de différentiation, de façon que les variations de la fréquence de sortie de l'oscillateur commandé en tension (20) correspondent aux variations du signal de sortie du circuit de différentiation, et par conséquent également à la vitesse d'ascension ou de descente.

3. Variomètre selon la revendication 2, caractérisé en ce que le générateur d'impulsions (203) est branché à la sortie de l'oscillateur commandé en tension (201), de façon que la variation du rythme de répétition des impulsions produites par le générateur d'impulsions fournisse l'indication voulue de la vitesse d'ascension ou de descente.

4. Variomètre selon l'une quelconque des revendications précédentes, caractérisé en ce qu'il comprend un comparateur (207) destiné à comparer un second signal de sortie de vol en piqué (X) du circuit de différentiation à un signal de vol en piqué de référence provenant des troisièmes moyens (211), représentant une vitesse de descente maximum, et se branchant à un oscillateur (208) pour produire un signal audible, lorsque le signal de sortie du circuit de différentiation dépasse le signal de vol en piqué de référence, de manière à fournir une alarme de vol en piqué.

5. Variomètre selon l'une quelconque des revendications 1 à 4, caractérisé en ce que le circuit de différentiation comprend un amplificateur (107) dont le gain peut se régler par un circuit de compensation (108) répondant au signal de sortie de transducteur de pression (100) de manière à compenser la perte de sensibilité due à une réduction globale de la pression statique, lorsque l'altitude augmente.

6. Variomètre selon l'une quelconque des revendications précédentes, caractérisé en ce qu'il comprend des moyens pouvant fonctionner en réponse à un comparateur supplémentaire compris dans les moyens de comparateur (204), ce comparateur supplémentaire étant branché à la sortie du circuit de différentiation, et à un signal de référence prédéterminé issu du premier et second moyens (204, 210), ce signal de référence représentant une vitesse de descente prédéterminée ou une plage de vitesses de descente comprenant la vitesse de descente prédéterminée, de manière à supprimer le signal audible, lorsque la vitesse de descente actuelle est égale à la vitesse de descente prédéterminée ou contenue dans la plage ci-dessus.

**Patentansprüche**

1. Variometer zur Verwendung in einem Segelflugzeug oder dergleichen, mit einem an eine Differenzierschaltung (102, 103, 104, 106—111) angeschlossenen elektrischen Druckwandler zur Erzeugung eines für die Steig- oder Sinkgeschwindigkeit des Segelflugzeugs repräsentativen Signals, der an eine ein Audio-Ausgangssignal erzeugende Audioschaltung angeschlossen ist, dessen Änderungen den Änderungen des Ausgangssignals der Differentiationsschaltung entsprechen, so daß Abweichungen der tatsächlichen Steig- oder Sinkgeschwindigkeit von einer voreinstellbaren Steig- oder Sinkgeschwindigkeit angezeigt werden, dadurch gekennzeichnet, daß die Audioschaltung einen Impulsgenerator (203) enthält, der entsprechend einem ersten Ausgangssignal (Y) der Differentiationsschaltung so gesteuert ist, daß die Wiederholungsfrequenz des Ausgangssignals des Impulsgenerators mit steigender Abweichung von einer voreingestellten Steig- oder Sinkgeschwindigkeit ansteigt, und daß die Audioschaltung ferner eine Bereichs-Schalteinrichtung (205) enthält, die die Tonhöhe der vom Impulsgenerator (203) erzeugten Impulse steuert und, gesteuert von einer Komparatoreinrichtung (204), das Ausgangssignal der Differentiationsschaltung mit einem oder mehreren von einer ersten und zweiten Einrichtung (209, 210) erhaltenen Bezugssignalen vergleicht, wodurch eine unterschiedliche Tonhöhe zur Anzeige erzeugt wird, ob die tatsächliche Steig- oder Sinkgeschwindigkeit kleiner als eine voreingestellte Steig- oder Sinkgeschwindigkeit ist.

2. Variometer nach Anspruch 1, dadurch gekennzeichnet, daß die Audioschaltung einen spannungsgesteuerten Oszillator (201) enthält, der an den ersten Ausgang der Differentiationsschaltung angeschlossen ist, wodurch Änderungen der Ausgangsfrequenz des spannungsgesteuerten Oszillators (201) Änderungen des Ausgangssignals der Differentiationsschaltung und damit der Steig- oder Sinkgeschwindigkeit entsprechen.

3. Variometer nach Anspruch 2, dadurch gekennzeichnet, daß der Impulsgenerator (203) an den Ausgang des spannungsgesteuerten Oszillators (201) angeschlossen ist, wodurch die Änderung der Wiederholungsfrequenz der vom Impulsgenerator erzeugten Impulse die Anzeige der Steig- oder Sinkgeschwindigkeit liefert.

4. Variometer nach einem der vorstehenden Ansprüche, gekennzeichnet durch einen Komparator (207) zum Vergleich eines zweiten Ausgangssignals (X) der Differentiationsschaltung mit einem von einer dritten Einrichtung (211) erhaltenen Sturz-Bezugssignal, das eine maximale Sinkgeschwindigkeit wiedergibt, wobei der Komparator (207) an einen Oszillator (208) zur Erzeugung eines hörbaren Signals angeschlossen ist, wenn das Ausgangssignal der Differentiationsschaltung das Sturz-Bezugssignal übersteigt, um vor einem Sturz zu warnen.

5. Variometer nach einem der Ansprüche 1 bis 4, dadurch gekennzeichnet, daß die Differentiationsschaltung einen Verstärker (107) enthält, dessen Verstärkung mittels einer Kompensationsschaltung (108) einstellbar ist, die auf das Ausgangssignal des Druckwandlers (100) derart anspricht, daß eine Empfindlichkeitsverminderung infolge einer Gesamtverminderung des statischen Druckes mit ansteigender Höhe kompensiert wird.

6. Variometer nach einem der vorstehenden Ansprüche, gekennzeichnet durch Einrichtungen, die auf einen weiteren Komparator in der Vergleichseinrichtung (204) ansprechen, der an den Ausgang der Differentiationsschaltung angeschlossen ist, sowie auf ein vorbestimmtes, von der ersten und zweiten Einrichtung (209, 210) erhaltenes Bezugssignal, das eine vorbestimmte Sinkgeschwindigkeit oder einen Bereich von Sinkgeschwindigkeiten, der die vorbestimmte Sinkgeschwindigkeit umfaßt, darstellt, so daß das hörbare Signal unterdrückt wird, wenn die tatsächliche Sinkgeschwindigkeit gleich der vorbestimmten Sinkgeschwindigkeit ist oder innerhalb des Bereiches liegt.

FIG.1.

0 024 904

FIG.2.

0 024 904